# FASCICULE DE BREVET EUROPEEN

(11) **EP 4 184 810 B1**
(45) Date de publication et mention de la délivrance du brevet: **21.10.2026**
(21) Numéro de dépôt: 22208556.5
(22) Date de dépôt: 21.11.2022
(51) Int. Cl.: H04B 10/079, H04B 10/118, H04B 10/70

(54) **RESEAU DE TELECOMMUNICATIONS QUANTIQUES AVEC UNE COMPOSANTE SPATIOPORTEE OU AEROPORTEE**
QUANTENTELEKOMMUNIKATIONSNETZWERK MIT EINER RÄUMLICH ODER LUFTGETRAGENEN KOMPONENTE
QUANTUM TELECOMMUNICATIONS NETWORK WITH A SPATIO-SUPPORTED OR AIRBORNE COMPONENT

(30) Priorité: 22.11.2021 FR 2112323
(43) Date de publication de la demande: 24.05.2023
(73) Titulaire: THALES, 92400 Courbevoie (FR)
(72) Inventeur: VAN DEN BOSSCHE, Mathias, 31120 GOYRANS (FR)
(74) Mandataire: Atout PI Laplace

(56) Documents cités:
- WO-A1-2021/016095
- WO-A1-2021/067631
- CN-A- 111 817 791
- US-A1- 2016 191 173
- US-A1- 2021 175 976
- NEDASADAT HOSSEINIDEHAJ ET AL: "Satellite-Based Continuous-Variable Quantum Communications: State-of-the-Art and a Predictive Outlook", ARXIV.ORG, CORNELL UNIVERSITY LIBRARY, 201 OLIN LIBRARY CORNELL UNIVERSITY ITHACA, NY 14853, 28 December 2017 (2017-12-28), XP081456803, DOI: 10.1109/COMST.2018.2864557

## Description

L'invention relève du domaine de l'information quantique, et plus particulièrement des réseaux de télécommunications quantiques. Elle vise à rendre possible la réalisation de tels réseaux présentant une grande portée géographique, par exemple supérieure à 100 km.

Un réseau de télécommunications (ou simplement de communications) quantique permet de transporter de l'information quantique entre plusieurs processeurs ou senseurs (nœuds terminaux) quantiques situés à des emplacements différents. Un tel réseau se prête à diverses applications telles que la distribution de clés quantiques, la synchronisation, l'interférométrie entre capteurs lointains, le calcul quantique distribué, le calcul quantique délégué, voire la communication à haut débit, etc. Voir par exemple US 2021/0175976.

Les réseaux de télécommunications quantiques sont pour l'instant expérimentés dans des infrastructures en fibre optique au sein desquelles l'information quantique est portée par des photons (*Lago-Rivera 2021*)*.* La fibre optique présente un taux d'absorption des photons qui réduit leur puissance d'environ 0,2 dB.km⁻¹. Comme par ailleurs, le théorème de non-clonage de la physique quantique ne permet pas de répliquer les états de photons qui portent l'information, il en résulte une limite de portée de ces réseaux de l'ordre de 100km - voir à ce propos *Pirandola 2015* - même si des répéteurs quantiques ont été proposés pour étendre cette portée, voir par exemple WO 2021/067631.

L'invention vise à surmonter cette limite de portée et à permettre la réalisation de réseaux de télécommunications quantiques pouvant s'étendre sur plusieurs centaines ou milliers de kilomètres.

Conformément à l'invention ce but est atteint en utilisant des satellites pour transmettre des paires (plus généralement, des multiplets) de photons intriqués à des stations au sol (bien que l'utilisation de stations aéroportées telles des sondes stratosphériques ou des drones à haute altitude soit également envisageable) formant les nœuds d'un réseau. La distribution d'intrication à partir de satellites permet de limiter fortement les pertes car, dans des conditions atmosphériques favorables, la propagation en espace libre présente des pertes bien moindres que la propagation en fibre optique. Elle a été démontrée sur des distances supérieures à 1000 km - voir *Yin 2020.* Les états intriqués sont stockés dans des mémoires quantiques contenues dans les stations au sol, ce qui permet de contourner au moins en partie le problème de l'intermittence des liens satellites, étant donné que les meilleures mémoires quantiques disponibles présentent des durées de cohérence de plusieurs heures (*Zhong 2015*)*.* Des opérations de commutation d'intrication entre nœuds partageant des états intriqués permettent ensuite de propager les corrélations d'intrication à des stations situées au-delà de la zone de visibilité commune d'un satellite.

Un premier aspect de l'invention est donc l'utilisation, dans l'architecture d'un système de télécommunications quantiques génériques, d'une composante satellite. Ce système contient notamment une fonction canal de communication quantique (mise en œuvre par un système optique) pour transporter l'information quantique, et une fonction canal de communication classique (par câble, fibre optique, ondes hertziennes...) pour assurer des opérations complémentaires au canal quantique et plus largement permettre la gestion du système. Cette architecture est orientée par la gestion de la ressource *consommable* et *périssable* qu'est l'intrication entre états de sous-systèmes servant aux télécommunications quantiques.

Un deuxième aspect de l'invention est le fait que le satellite assure une fonction de source d'états intriqués à plusieurs sous-systèmes, dont les membres sont distribués vers des stations terrestres, spatioportées ou aéroportées. Ces stations constituent des nœuds élémentaires d'un réseau de télécommunications quantiques et assurent une fonction de commutation de l'intrication afin de créer une relation d'intrication entre des éléments plus éloignés que les membres du multiplet distribué par satellite. Ces stations-nœuds peuvent en outre contenir une fonction de distillation de l'intrication reçue par satellite afin d'augmenter le taux d'intrication des multiplets disponibles. Enfin, ces stations-nœuds peuvent comprendre une fonction qui annonce au reste du système la réception de ressource d'intrication ou sa consommation. Pour ceci, les éléments de multiplets intriqués doivent pouvoir être identifiés dans le système.

Ces nœuds peuvent en outre servir de point d'entrée de réseaux fibrés qui distribuent de l'intrication à une échelle plus locale (agglomération...). Cette fonction d'entrée/interface se fait par commutation d'intrication entre éléments distribués par satellite et éléments distribués par fibre.

Un troisième aspect de l'invention est que le système contient une fonction de stockage des composantes d'états intriqués dans une ou plusieurs mémoires quantiques en attendant d'être consommées par une opération de commutation d'intrication à venir. Des mémoires quantiques sont localisées dans les stations-nœuds, et avantageusement aussi dans les satellites.

Un quatrième aspect de l'invention est le fait que le système peut avantageusement comprendre une fonction qui catalogue la ressource que constituent les composantes d'états intriqués disponibles. Ce catalogage comprend notamment la date d'acquisition de la ressource, sa durée de vie restante estimée, sa qualité d'intrication et de la localisation de sa (ses) contrepartie(s).

Un cinquième aspect de l'invention est que le système peut avantageusement comprendre une fonction qui gère l'aspect périssable et consommable de la ressource d'intrication, d'une part en planifiant les opérations de distribution d'intrication par satellite, et d'autre part en optimisant le choix des multiplets consommés pour commuter de l'intrication sur des distances plus grandes en fonction de paramètres comme par exemple l'âge de la ressource vis-à-vis de son temps de décohérence, les dates où la recharge d'un nœud sera possible pour des raisons géométriques, de conditions d'éblouissement ou de perturbation météorologique de la station-nœud.

Un objet de l'invention est donc un réseau de télécommunications quantiques selon la revendication 1.

Un autre objet de l'invention est un procédé de télécommunications quantiques selon la revendication 7, mettant en œuvre un tel réseau.

Les dessins annexés illustrent l'invention :
La figure 1 illustre le principe de la téléportation d'états quantiques;
La figure 2 illustre le principe de la commutation d'intrication ;
La figure 3 illustre la structure générale et le principe de fonctionnement d'un réseau de télécommunications quantiques selon un mode de réalisation de l'invention ;
La figure 4 illustre la propagation d'un lien d'intrication entre deux nœuds éloignés d'un réseau de télécommunications quantiques selon un mode de réalisation de l'invention ;
La figure 5 est un schéma de principe de la charge utile d'un satellite pouvant être utilisé pour la réalisation d'un réseau de télécommunications quantiques selon un mode de réalisation de l'invention ; et
La figure 6 est un schéma de principe d'un nœud d'un réseau de télécommunications quantiques selon un mode de réalisation de l'invention.

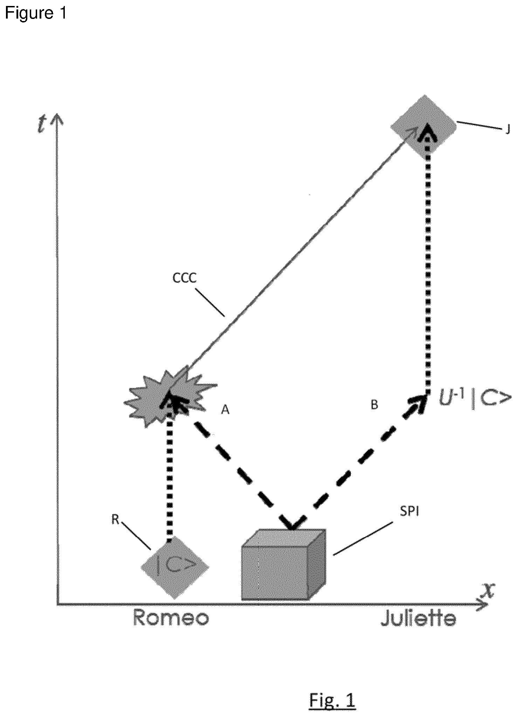

Le principe de la téléportation d'états quantiques est décrit dans la figure 1, où l'axe horizontal (x) représente une séparation spatiale et l'axe vertical (t) l'écoulement du temps.

Un premier nœud de communications quantiques, Roméo (R) dispose d'un q-bit dans l'état |*C*> et veut envoyer cet état à un deuxième nœud, Juliette (J). Dans un souci de simplicité on considèrera que C est un système à deux états |*C*₊>, |*C*₋> ; on a donc en général |*C*>=α|*C*₊>+β|*C*₋> avec α, β complexes et tels que α²+β²=1.

Pour transmettre l'état |*C*> - qui est en général inconnu - Roméo et Juliette disposent d'un canal quantique et d'un canal classique CCC. Le canal quantique est réalisé au moyen d'une source de paires de particules intriquées SPI. La source SPI génère deux photons (ou autres particules) A et B, qui se trouvent dans un état maximalement intriqué, par exemple : $\left|AB>=\left(\left|{A}_{+}>\left|{B}_{-}>+\left|{A}_{-}>\left|{B}_{+}>\right.\right.\right.\right.\right)\right. / √ 2$ où |A₊>, |A₋> sont deux états orthogonaux (typiquement de polarisation) du photon A et |B₊>, |B₋> sont deux états orthogonaux (typiquement de polarisation) du photon B.

Le photon A est envoyé à Roméo, le photon B à Juliette.

Le canal classique CCC est un canal de communication standard qui permet d'échanger de l'information classique.

Pour téléporter l'état de C vers Juliette, Romeo procède à une mesure conjointe de l'état de A et de C (par exemple, de leur polarisation). Typiquement, il s'agit d'une mesure de Bell, qui projette le système AC sur une base de Bell. Un calcul simple montre que cette mesure va projeter l'état superposé de AC sur l'une de ses composantes, et le caractère non-local de l'état de AB va faire que l'état de B va être également projeté dans l'état dans lequel C se trouvait avant la mesure, à une opération unitaire près. Cette opération unitaire dépend du résultat de la mesure de l'état de AC que Roméo a obtenu. Le canal classique CCC sert alors à Roméo pour communiquer à Juliette le résultat de la mesure qu'il a obtenu sur AC. De cette façon Juliette peut appliquer à B la transformation unitaire U⁻¹ qui correspond à ce résultat, et mettre B dans l'état exact où était C : l'état C a été téléporté chez Juliette.

Un exemple de mise en œuvre expérimentale de la téléportation quantique est décrit, par exemple, dans *Bouwmeester 1997.*

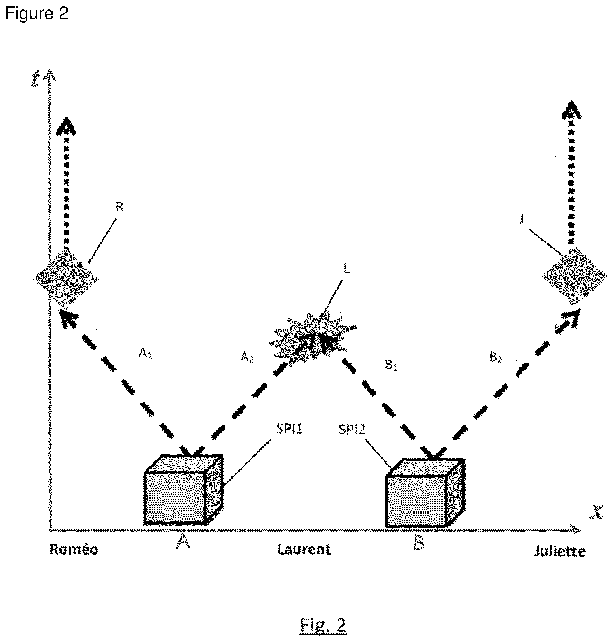

Une extension du principe de téléportation est le processus de commutation d'intrication. La commutation d'intrication permet de créer de l'intrication entre deux sous-systèmes distants qui participent chacun à un canal quantique du type de celui mis en jeu dans une téléportation. Ce principe, illustré par la figure 2, est un élément de base de l'invention. Comme dans la figure 1, dans la figure 2 l'axe horizontal (x) représente une séparation spatiale et l'axe vertical (t) l'écoulement du temps.

Une première source de paires intriquées SPI1 établit un premier canal quantique entre Roméo et un nœud intermédiaire Laurent (L) servant de routeur d'intrication en leur transmettant une première paire de photons intriqués A₁, A₂. Une seconde source de paires maximalement intriquées SPI2 établit un second canal quantique entre Laurent et Juliette en leur transmettant une seconde paire de photons maximalement intriqués B₁, B₂. En effectuant une mesure conjointe de l'état des photons A₂, B₁ qu'il reçoit, Laurent projette de façon déterministe le système A₁B₂ dans un état intriqué. Suite à la mesure conjointe effectuée par Laurent, Roméo et Juliette disposent donc d'un canal quantique (c'est-à-dire d'un système de particules intriquées) qui leur permet de procéder à la téléportation d'états quantiques entre eux, alors même qu'ils ne partagent pas une source de paires intriquées comme dans le cas de la figure 1.

Une mise en œuvre concrète d'une commutation d'intrication est décrite par exemple dans *Yang 2006.*

Les processus de téléportation et de commutation d'intrication peuvent être généralisés à des systèmes multipartites et avec des systèmes plus riches que des q-bits (systèmes quantiques présentant plus de deux états orthogonaux discrets, voire un continuum d'états). Cela vaut également pour l'invention, bien que la description suivante soit effectuée dans un contexte de q-bits et de paires intriquées dans un souci de simplicité.

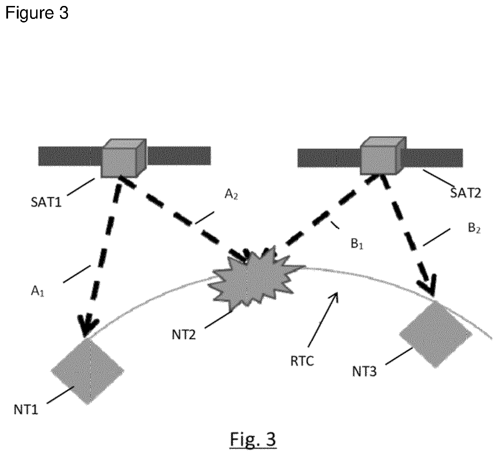

La figure 3 illustre un principe à la base de l'invention dans le cas d'un réseau très simple comprenant trois nœuds au sol NT1, NT2, NT3 reliés par un réseau de télécommunications classique RTC (câblé, par fibre optique, par ondes hertziennes...) et deux satellites SAT1, SAT2 (il peut en fait s'agir d'un seul et même satellite considéré à deux instants différents), de préférence en orbite basse. Chaque satellite transporte une source de photons intriqués, qui peuvent être transmis vers les nœuds au sol, qui sont équipés pour les détecter. Le premier satellite SAT1 envoie un premier photon A₁ d'une première paire intriquée vers le premier nœud NT1 et un second photon A₂ de la paire intriquée vers le deuxième nœud NT2 ; le second satellite SAT2 envoie un premier photon B₁ d'une seconde paire intriquée vers le deuxième nœud NT2 et un second photon B₂ de la paire vers le troisième nœud NT3. Une commutation d'intrication entre NT1 et NT3 via NT2 est donc possible, comme cela a été expliqué plus haut en référence à la figure 2. L'utilisation de sources de paires de photons intriqués embarquées dans des satellites permet d'établir un lien quantique entre nœuds pouvant être très éloignés les uns des autres.

Les sources embarquées peuvent transmettre les paries de photons intriqués :
- soit simultanément vers des nœuds qui doivent être visibles simultanément, si le satellite ne dispose pas de mémoire quantique à bord pour stocker des états quantiques intriqués ;
- soit de façon différée si le satellite dispose d'une telle mémoire, ce qui permet d'envoyer des photons intriqués à des nœuds qui ne sont pas nécessairement visibles simultanément.

Les nœuds au sol disposent d'une mémoire quantique (par exemple à base d'Eu₃⁺:YSiO₅) qui permet de stocker les éléments d'états intriqués reçus et constituer une réserve d'intrication, une ressource à consommer lorsque le besoin de téléportation se fait ressentir.

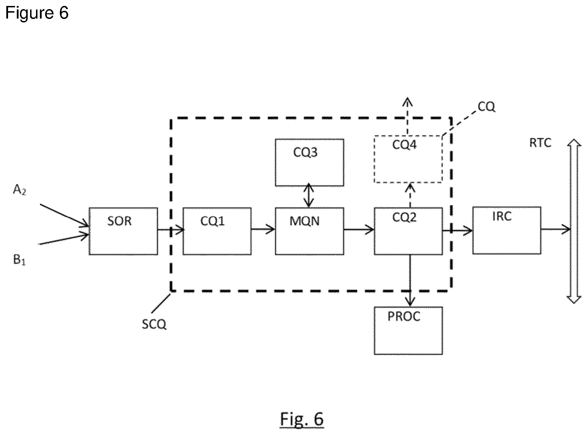

A cet effet, comme cela sera expliqué plus en détail en référence à la figure 6, ils peuvent être équipés d'un dispositif de distillation d'intrication, de façon à maximaliser le niveau d'intrication des états reçus de la source en orbite.

Un aspect important de l'invention est que la principale ressource du réseau est constituée par le stock d'états intriqués disponibles pour être commutés plus avant, ou consommés par téléportation. De par les phénomènes de décohérence, il faut tenir compte du fait que cette ressource est non-seulement consommable, mais également périssable.

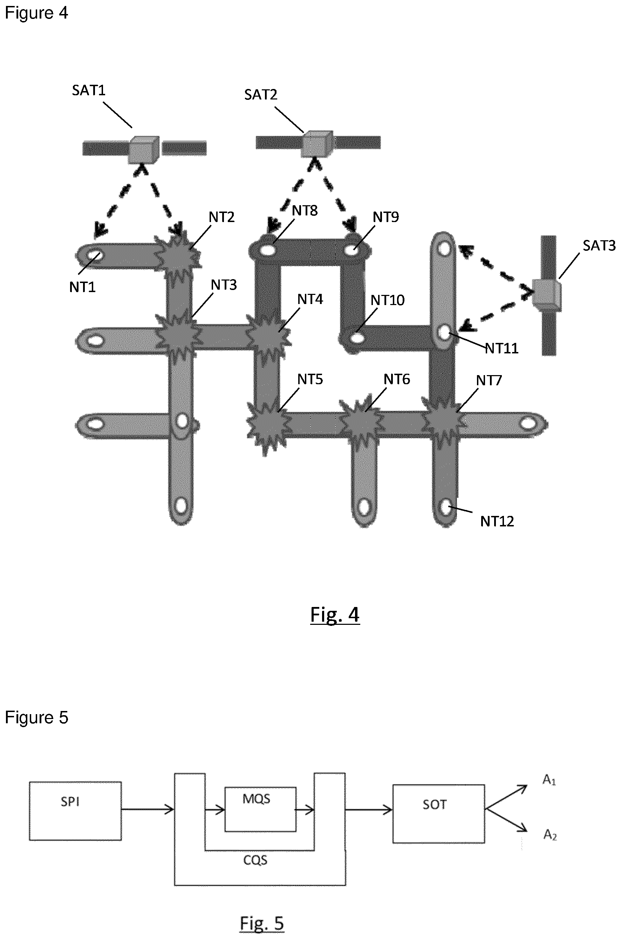

La figure 4 illustre l'utilisation de cette ressource pour la création d'un lien quantique entre nœuds éloignés. La figure montre un réseau au moins partiellement maillé constitué par des liens d'intrication élémentaires comme ceux entre NT1 et NT2 et entre NT2 et NT3 dans la figure 3. Dans le cas de la figure 4 il y a donc un lien d'intrication élémentaire (c'est-à-dire le partage d'une paire intriquée) entre NT1 et NT2, entre NT2 et NT3, etc. On remarque qu'un nœud peut faire partie de plusieurs liens d'intrication élémentaires : par exemple, le nœud NT4 partage une première paire intriquée avec NT3, une deuxième paire intriquée avec NT5 et une troisième paire intriquée avec NT8. Les paires sont distribuées par les satellites SAT1, SAT2, SAT3.

Pour créer un lien d'intrication entre deux nœuds non adjacents (c'est-à-dire non reliés par un lien d'intrication quantique élémentaire) il fait identifier au moins un chemin constitué de liens d'intrication. Par exemple, pour relier NT1 à NT12 on identifie un premier chemin passant par NT2, NT3, NT4, NT5, NT6, NT7, et un deuxième chemin passant par NT2, NT3, NT4, NT8, NT9, NT10, NT11, NT7. Si, comme dans ce cas, plusieurs chemins sont identifiés, il faut en choisir un sur la base d'un ou plusieurs critères de sélection, comme cela sera discuté plus loin.

Dans l'exemple de la figure 4 on considère que c'est le premier chemin qui est choisi. Il faut alors propager le lien d'intrication de proche en proche par des opérations de commutation d'intrication. Tout d'abord, on utilise le nœud NT2 comme répéteur pour créer un lien d'intrication entre NT1 et NT3 ; puis, NT4 permet de propager le lien d'intrication jusqu'à NT5 ; ensuite NT6 crée un lien d'intrication entre NT1 et NT7. NT7 étant adjacent de NT12, une dernière opération de commutation crée un lien d'intrication entre NT1 et NT12. De cette façon, on établit un canal quantique entre NT1 et NT12, qui permet la transmission directe d'un q-bit entre ces deux nœuds éloignés. Ces opérations sont répétées pour chaque q-bit, le cas échéant en utilisant différents chemins.

Les opérations de commutation d'intrication et de téléportation nécessitent la transmission d'information classique, ce qui est fait au moyen du réseau classique (référence RTC sur la figure 3, non représenté sur la figure 4) auquel tous les nœuds sont reliés.

Il est important de noter que chaque opération de commutation d'intrication ou de transmission de q-bit consomme une ressource d'intrication. Ces ressources doivent donc être constamment renouvelées par les sources embarquées dans les satellites.

La ressource critique d'un réseau selon l'invention étant la disponibilité d'états intriqués entre nœuds, il est important de la gérer de manière optimale. La disponibilité de la ressource dépend de 4 paramètres :
- Sa consommation par des opérations de commutation d'intrication ou téléportation ;
- Son vieillissement, par exemple par décohérence de la ressource créée et non-consommée :
- La visibilité de sources embarquées sur satellites dédiée à la renouveler ; et
- Les conditions atmosphériques pouvant affecter son renouvellement.

Avantageusement, donc, le chemin suivi pour créer un lien d'intrication entre deux nœuds éloignés (c'est-à-dire ne partageant pas une paire intriquée émise par un satellite) est donc choisi en tenant compte :
- Des plans de passage/présence des plateformes non-terrestres :
- Des prévisions météorologiques sur chaque répéteur terrestre ;
- De l'état de consommation de la ressource sur chaque lien élémentaire ;
- Des statistiques de besoin de commutation sur les liens.

Par exemple, on pourra privilégier le passage par des nœuds qui, comptetenu du plan de passage des satellites et des conditions météorologiques, seront rapidement réapprovisionnés en ressources d'intrication. De même, sachant qu'une ressource d'intrication présente une date limite d'utilisation au-delà de laquelle elle est considérée trop dégradée à cause de la décohérence, on pourra privilégier la consommation de ressources proches de leur date limite plutôt que de ressources ayant une durée de vie restante plus longue. Par ailleurs, on privilégiera l'utilisation de nœuds qui, en moyenne, sont moins sollicités. Tous ces différents critères de sélection peuvent par exemple être pondérés, de manière à attribuer à chaque chemin possible entre deux nœuds d'extrémité un « coût » à minimiser. Il s'agit là d'un problème dérivé de celui rencontré dans le domaine de l'observation de la terre dans l'espace, où il faut renouveler des contacts avec des scènes déterminées.

Le choix du chemin pour créer un canal quantique entre deux nœuds éloignés peut être effectué de manière centralisée, par un ordinateur contrôlant l'ensemble du réseau, ou de manière décentralisée par des ordinateurs associés aux différents nœuds. Dans tous les cas, les nœuds doivent transmettre l'état de leurs ressources à l'ordinateur central et/ou aux ordinateurs des autres nœuds.

La recharge de nœuds en ressources d'intrication est avantageusement planifiée en fonction de leur état de consommation et des conditions météorologiques prévues lors des passages à venir des satellites.

La figure 5 illustre schématiquement la structure et le fonctionnement de la charge utile quantique d'un satellite pouvant être utilisé dans un réseau selon un mode de réalisation de l'invention.

Le cœur d'une telle charge utile est constitué par une source de paires (plus généralement, multiplets de particules quantiques) dans un état quantique intriqué, SPI. Typiquement ces états quantiques intriqués peuvent être des états de polarisation de photons, mais il peut s'agir également d'états de spins électroniques ou nucléaires, des états de temps/énergie, etc.

Un circuit quantique CQS permet de stocker les états quantiques générés par la source SPI dans une mémoire quantique MQS, par exemple du type décrit par *Zhong 2015* (spins nucléaires) ou *Dréau 2018* (spins électroniques dans des centres NV), et de convertir les états stockés dans la mémoire MQS en photons tout en conservant les relations d'intrication. Par exemple *Dréau 2018* divulgue une conversion de spins électroniques dans des centres NV en photons dans le proche infrarouge. Les photons intriqués A₁, A₂ sont ensuite transmises au sol par un système optique de transmission SOT, par exemple comprenant un ou plusieurs télescopes.

L'utilisation d'une mémoire MQS et du circuit quantique d'écriture/lecture associé CQS n'est pas indispensable - il est également possible de transmettre directement des photons générés par la source SPI ou obtenus par conversion à la volée des états intriqués générés par cette dernière. Cependant, cela nécessite la transmission simultanée de deux photons ou plus vers des nœuds au sol différents et en co-visibilité. L'utilisation de la mémoire permet d'utiliser un seul télescope pour transmettre, à des instants différents, deux photons intriqués vers des nœuds qui ne doivent pas nécessairement être simultanément visibles par le satellite.

La figure 6 illustre schématiquement la structure et le fonctionnement d'un nœud d'un réseau de télécommunications quantiques selon un mode de réalisation de l'invention.

Le nœud comprend un système optique récepteur SOR permettant de recevoir des photons provenant des satellites ; il peut s'agir par exemple d'un télescope ou un ensemble de télescopes, présentant une orientation fixe ou piloté(s) pour suivre à la trace un ou plusieurs satellites lors de leur passage.

Les photons collectés sont fournis en entrée à un système de circuits quantiques qui, dans le mode de réalisation de la figure 6, comprend :
- Un dispositif de mémoire quantique MQN permettant de stocker des états quantiques.
- Un premier circuit quantique CQ1 permettant de stocker dans la mémoire MQN l'état du photon collecté, autrement dit de transférer l'état quantique du photon vers un état quantique d'un sous-système quantique de la mémoire.
- Un deuxième circuit quantique CQ2 permettant d'effectuer une mesure quantique conjointe sur les états quantiques de deux sous-systèmes quantiques du dispositif de mémoire quantique, associés à des photons respectifs. Cette mesure quantique - par exemple une mesure de Bell - projette les états quantiques mesurés sur une base d'étant maximalement. Il s'agit de la mesure qui a été décrite plus haut en référence à la figure 2 et qui permet de réaliser une commutation d'intrication. On remarque que la mesure conjointe n'est pas effectuée directement sur les photons, mais sur des sous-systèmes d'une mémoire quantique vers lesquels les états quantiques des photons ont été transférés. On peut donc parler d'une mesure conjointe « indirecte ».
- Optionnellement, un troisième circuit quantique CQ3 pour appliquer un algorithme de distillation quantique à une pluralité de sous-systèmes quantiques du dispositif de mémoire quantique. La distillation quantique est décrite, par exemple, dans *Kalb 2017.* Il faut noter que les circuits quantiques CQ3 de distillation des différents nœuds doivent s'échanger de l'information classique pour rendre utilisable la distillation.

Un circuit d'interface réseau IRC - conventionnel - permet de transmettre résultat de la mesure conjointe effectuée par le deuxième circuit quantique - qui constitue de l'information classique - à d'autres nœuds du réseau quantique par l'intermédiaire du réseau de télécommunications classique RTC.

Optionnellement, un processeur informatique PROC programmé de manière opportune peut être prévu afin de vérifier une violation des inégalités de Bell par une série de dites mesures quantiques conjointes, de manière à qualifier la qualité de l'intrication partagée, et éventuellement de détecter une violation de confidentialité. Le même ou un autre processeur peut superviser de manière générale le fonctionnement du nœud.

Il est important de noter que tous les composants du nœud de la figure 6 sont connus en soi et réalisables par des technologies existantes. Par exemple :
- Un mode de réalisation possible du premier circuit quantique CQ1 et de la mémoire quantique MQN est décrits dans *Zhong 2015.* Dans le nœud, l'utilisation d'une mémoire présentant un temps de décohérence élevé est beaucoup plus important que dans la source embarquée dans le satellite.
- Un mode de réalisation possible du deuxième circuit quantique CQ2 est décrit dans *Yang 2006.*
- Un mode de réalisation possible du troisième circuit quantique CQ3 est typiquement une procédure de distillation (ou purification) d'intrication comme décrit dans *Bennet 1996*ou une procédure de code correcteur d'erreur quantique telle qu'utilisée dans les calculateurs quantiques pour former un q-bit logique pur à partir de plusieurs q-bits physiques bruités.

L'invention n'est pas limitée aux modes de réalisation qui viennent d'être décrits ; de nombreuses variantes sont possibles.

Par exemple, la source embarquée peut générer des multiplets de plus de deux particules intriquées, ce qui permet de réaliser des liens d'intrication entre plus de deux nœuds. En outre, comme cela a été évoqué plus haut, les processus de téléportation et de commutation d'intrication mis en œuvre dans un réseau selon l'invention. peuvent être généralisés à des systèmes multipartites et avec des systèmes plus riches que des q-bits (systèmes quantiques présentant plus que deux états orthogonaux discrets, voire un continuum d'états).

Toute sorte d'état quantique de photons ou autres particules ou systèmes de particules peut être utilisé pour réaliser des multiplets intriqués : états de polarisation, états cohérents, états temporels voire hybrides...

La transmission d'états quantiques entre les satellites et les nœuds est assurée par des photons, mais il n'y a aucune limitation quant à leur fréquence / longueur d'onde. Pour des raisons technologiques (disponibilité des sources) il est cependant préférable d'utiliser des longueurs d'onde dans le proche infrarouge et notamment comprises entre 0.8 µm et 10 µm.

Il n'est pas nécessaire que tous les nœuds soient situés au sol. Certains nœuds peuvent par exemple être portés par des satellites ou des aéronefs.

Comme cela a été évoqué plus haut, les satellites peuvent être remplacés par des porteurs aériens, par exemple des sondes stratosphériques ou des drones volant à haute altitude.

Un ou plusieurs nœuds du réseau quantique peuvent être reliés à des réseaux locaux ou métropolitains, de manière à relier ces réseaux (terrestres) au réseau quantique de l'invention.

En outre, le système de circuits quantiques d'au moins un nœud peut également présenter un quatrième circuit quantique CQ4 (en pointillé sur la figure 6) permettent de transmettre directement l'état quantique d'un photon collecté par le système optique SOC - ou l'état ou d'un sous-système quantique du dispositif de mémoire quantique MQN - sur un canal quantique CQ. Ce canal peut faire partie d'un réseau quantique, et s'étendre potentiellement sur des kilomètres, ou bien présenter une longueur de quelques mètres ou centimètres pour relier un ordinateur quantique, ou tout autre dispositif quantique, à un réseau selon l'invention. Par conséquent, le réseau selon l'invention permet d'interconnecter des ordinateurs quantiques et/ou des autres réseaux quantiques, réalisant un véritable « internet quantique ».

L'invention n'est pas liée à une technologie particulière pour la réalisation des circuits et des mémoires quantiques.

### Références

- *Pirandola 2015 :* S. Pirandola, J. Eisert, C. Weedbrook, A. Furusawa, S. L. Braunstein « Advances In Quantum Teleportation », arXiv :1505.0783, 28 mai 2015.
- *Yin 2020* : Juan Yin et al. « Entanglement-based secure quantum cryptography over 1,120 kilometres», Nature volume 582, pages 501-505 (2020).
- *Zhong 2015 :* Manjin Zhong et al. « Optically addressable nuclear spins in a solid with a six-hour coherence time » Nature 517, 177 - 180, 8 janvier 2015.
- *Bouwmeester* 1997: Dik Bouwmeester et al. « Experimental quantum teleportation » Nature 390, 575 é 579, 11 décembre 1997
- *Yang 2006:* Tao Yang et al. « Experimental Synchronization of Independent Entangled Photon Sources » Phys. Rev. Lett. 96, 110501 (2006).
- *Dréau 2018:* Anaïs Dréau et al. « Quantum frequency conversion to telecom of single photonsfrom a nitrogen-vacancy center in diamond » arXiv:1801.03304v2 [quant-ph] 22 juin 2018.
- *Lago-Rivera 2021:* Dario Lago-Rivera et al. « Telecom-heralded entanglement between multimode solid-state quantum memories » Nature, 2021, vol. 594, no 7861, p. 37-40.
- *Bennet 1996*: C. H. Bennet et al. « Mixed-state entanglement and quantum error correction » Phys. Rev. A 54, 3824 (1996).
- *Kalb 2017 :* N. Kalb et al. « Entanglement distillation between solid-state quantum network nodes », Science, 356, 928 - 932 (2017).

## Revendications

1. Réseau de télécommunications quantiques comprenant :
- une pluralité d'au moins trois nœuds (NT1 - NT12), dont au moins certains sont situés au sol ;
- un réseau de télécommunications classiques (RTC) reliant lesdits nœuds entre eux ; - au moins une source (SPI) de multiplets de photons intriqués, portée par un satellite (SAT1, SAT2) ou un porteur aérien ; et
- un système optique de transmission (SOT) permettant de transmettre les photons desdits multiplets vers des nœuds respectifs dudit réseau de télécommunications quantiques ;
dans lequel chaque dit nœud comprend :
- un système optique de réception (SOR) pour collecter des photons provenant de ladite ou d'une dite source (SPI) ;
- une interface réseau classique (IRC) permettant d'échanger de l'information classique avec d'autres nœuds de réseau de télécommunications quantiques ; et
- un système de circuits quantiques (SCQ) configuré pour effectuer une mesure quantique conjointe, directe ou indirecte, sur les états quantiques d'au moins deux photons collectés par le système optique les projetant sur une base d'états maximalement intriqués et pour transmettre le résultat de la mesure quantique conjointe vers d'autres nœuds de réseau de télécommunications quantiques via l'interface réseau classique ; **caractérisé en ce que** :
- dans au moins certains desdits nœuds, ledit système de circuits quantique comprend:
- un dispositif de mémoire quantique (MQN) comprenant une pluralité de sous-systèmes quantiques ;
- un premier circuit quantique (CQ1) configuré pour transférer des états quantique de photons collectés par le système optique de réception vers des sous-systèmes quantiques respectifs du dispositif de mémoire quantique pour y être stockés, moyennant quoi des liens d'intrication sont établis entre des sous-systèmes quantiques des dispositifs de mémoire quantique des différents nœuds, lesdits liens d'intrication constituant des ressources d'intrication consommables et périssables par décohérence ; et
- un deuxième circuit quantique (CQ2) configuré pour effectuer ladite mesure quantique conjointe sur les états quantiques d'au moins deux sous-systèmes quantiques du dispositif de mémoire quantique, associés à des photons respectifs ; et **en ce que**
- ladite source (SPI) de multiplets de photons intriqués et ledit système optique de transmission sont configurés pour transmettre des multiplets de photons mutuellement intriqués à différents nœuds (NT1 - NT12) du réseau de manière à renouveler lesdites ressources en fonction de leur consommation et de leur vieillissement.

2. Réseau de télécommunications quantiques selon la revendication 1 dans lequel le système de circuits quantiques d'au moins un dit nœud comprend également un troisième circuit quantique (CQ3) configuré pour appliquer un algorithme de distillation quantique à une pluralité de sous-systèmes quantiques du dispositif de mémoire quantique.

3. Réseau de télécommunications quantiques selon l'une des revendications précédentes dans lequel ledit ou chaque dit nœud (NT1 - NT12) comprend également un processeur (PROC) configuré ou programmé pour vérifier une violation des inégalités de Bell par une série de dites mesures quantiques conjointes, de manière à qualifier la qualité de l'intrication distribuée.

4. Réseau de télécommunications quantiques selon l'une des revendications précédentes dans lequel le système de circuits quantiques (SCQ) d'au moins un dit nœud est configuré pour transmettre l'état quantique d'un photon collecté par le système optique ou d'un sous-système quantique du dispositif de mémoire quantique sur un canal quantique (CQ).

5. Réseau de télécommunications quantiques selon l'une des revendications précédentes dans lequel les multiplets sont des paires de photons intriqués.

6. Réseau de télécommunications quantiques selon l'une des revendications précédentes dans lequel le deuxième circuit quantique d'au moins un dit nœud est configuré pour effectuer une mesure de Bell sur les états quantiques de deux sous-systèmes quantiques du dispositif de mémoire quantique, dont il résulte une commutation d'intrication entre deux autres nœuds du réseau.

7. Procédé de télécommunications quantiques au moyen d'un réseau selon l'une des revendications précédentes comprenant les étapes suivantes :
a) utiliser ledit ou lesdits satellites (SAT1, SAT2) ou porteurs aériens pour transmettre des multiplets de photons mutuellement intriqués à différents nœuds (NT1 - NT12) de réseau, de telle sorte que des liens quantiques d'intrication entre paires ou multiplets de nœuds forment un sous-graphe couvrant dudit réseau ; et renouveler lesdits liens quantiques d'intrication en fonction de leur consommation et de leur vieillissement ;
b) définir un nœud de départ (NT1) et un nœud d'arrivé (NT12) non directement reliés par un lien quantique d'intrication et choisir un ou plusieurs nœud intermédiaires tels que les liens quantiques d'intrication entre ces nœuds forment un chemin du nœud de départ au nœud d'arrivée ;
c) utiliser les systèmes circuits quantiques (SCQ) des nœuds intermédiaires et le réseau de télécommunications classiques pour effectuer une succession d'opérations d'échange d'intrication entre nœuds de manière à créer un nouveau lien quantique d'intrication entre le nœud de départ et le nœud d'arrivée ; et
d) utiliser les systèmes de circuits quantiques des nœuds de départ et d'arrivée et le réseau de télécommunications classiques (RTC) pour transmettre un état quantique du nœud de départ au nœud d'arrivée en exploitant ledit nouveau lien quantique d'intrication.

## Patentansprüche

1. Quantentelekommunikationsnetzwerk, umfassend:
- eine Vielzahl von mindestens drei Knoten (NT1 - NT12), wovon sich mindestens einige am Boden befinden;
- ein klassisches Telekommunikationsnetzwerk (RTC), das die Knoten miteinander verbindet;
- mindestens eine Quelle (SPI) an Tupeln verschränkter Photonen, die von einem Satelliten (SAT1, SAT2) oder einem Trägerflugzeug getragen wird; und
- ein optisches Übertragungssystem (SOT), das es ermöglicht, die Photonen der Tupeln an jeweilige Knoten des Quantenkommunikationsnetzwerks zu übertragen;
wobei jeder Knoten umfasst:
- ein optisches Empfangssystem (SOR) zum Erheben von Photonen, die aus der oder einer Quelle (SPI) stammen;
- eine klassische Netzwerkschnittstelle (IRC), die es ermöglicht, klassische Informationen mit anderen Knoten eines Quantenkommunikationsnetzwerks auszutauschen; und
- ein Quantenschaltkreissystem (SCQ), das konfiguriert ist, um eine gemeinsame, direkte oder indirekte Quantenmessung an den Quantenzuständen mindestens zweier vom optischen System erhobener Photonen durchzuführen, das sie auf eine Basis von maximal verschränkten Zuständen projiziert, und um das Ergebnis der gemeinsamen Quantenmessung über die klassische Netzwerkschnittstelle an andere Knoten des Quantenkommunikationsnetzwerkknoten zu übertragen; **dadurch gekennzeichnet, dass**:
- das Quantenschaltkreissystem in mindestens einigen der Knoten umfasst:
- eine Quantenspeichervorrichtung (MQN), umfassend eine Vielzahl von Quantenteilsystemen;
- einen ersten Quantenschaltkreis (CQ1), der konfiguriert ist, um Quantenzustände von Photonen, die von dem optischen Empfangssystem erhoben werden, an jeweilige Quantenteilsysteme der Quantenspeichervorrichtung zu transferieren, um dort gespeichert zu werden, wodurch Verschränkungsverbindungen zwischen Quantenteilsystemen der Quantenspeichervorrichtungen der verschiedenen Knoten aufgebaut werden, wobei die Verschränkungsverbindungen durch Dekohärenz verbrauchbare und vergängliche Verschränkungsressourcen darstellen; und
- einen zweiten Quantenschaltkreis (CQ2), der konfiguriert ist, um die gemeinsame Quantenmessung an den Quantenzuständen mindestens zweier Quantenteilsysteme der Quantenspeichervorrichtung, die jeweiligen Photonen zugeordnet sind, durchzuführen; und dadurch, dass
- die Quelle (SPI) an Tupeln verschränkter Photonen und das optische Übertragungssystem konfiguriert sind, um miteinander verschränkte Photonen-Tupel an verschiedene Knoten (NT1 - NT12) des Netzwerks zu übertragen, um die Ressourcen in Abhängigkeit von ihrem Verbrauch und ihrer Alterung zu erneuern.

2. Quantentelekommunikationsnetzwerk nach Anspruch 1, wobei das Quantenschaltkreissystem mindestens eines Knotens auch einen dritten Quantenschaltkreis (CQ3) umfasst, der konfiguriert ist, um einen Quantendestillationsalgorithmus auf eine Vielzahl von Quantenteilsystemen der Quantenspeichervorrichtung anzuwenden.

3. Quantentelekommunikationsnetzwerk nach einem der vorstehenden Ansprüche, wobei der oder jeder knoten (NT1 - NT12) auch einen Prozessor (PROC) umfasst, der konfiguriert oder programmiert ist, um eine Verletzung von Bellschen Ungleichungen durch eine Reihe von gemeinsamen Quantenmessungen zu verifizieren, um die Qualität der verteilten Verschränkung zu qualifizieren.

4. Quantentelekommunikationsnetzwerk nach einem der vorstehenden Ansprüche, wobei das Quantenschaltkreissystem (SCQ) mindestens eines Knotens konfiguriert ist, um den Quantenzustand eines durch das optische System erhobenen Photons, oder eines Quantenteilsystems der Quantenspeichervorrichtung auf einem Quantenkanal (CQ) zu übertragen.

5. Quantentelekommunikationsnetzwerk nach einem der vorstehenden Ansprüche, wobei die Tupel Paare verschränkter Photonen sind.

6. Quantentelekommunikationsnetzwerk nach einem der vorstehenden Ansprüche, wobei der zweite Quantenschaltkreis mindestens eines Knotens konfiguriert ist, um einen Bell-Test an den Quantenzuständen zweier Quantenteilsysteme der Quantenspeichervorrichtung durchzuführen, woraus eine Verschränkungsumschaltung zwischen zwei anderen Knoten des Netzwerks hervorgehen.

7. Quantentelekommunikationsverfahren anhand eines Netzwerks nach einem der vorstehenden Ansprüche, umfassend die folgenden Schritte:
a) Verwenden des oder der Satelliten (SAT1, SAT2) oder Trägerflugzeuge, um miteinander verschränkte Photonen-Tupel an verschiedene Netzwerkknoten (NT1 - NT12) zu übertragen, sodass Quantenverschränkungsverbindungen zwischen Knoten-Paaren oder -Tupeln eine deckende Teilgrafik des Netzwerks bilden; und Erneuern der Quantenverschränkungsverbindungen in Abhängigkeit von ihrem Verbrauch und ihrer Alterung;
b) Definieren eines Startknotens (NT1) und eines Endknotens (NT12), die nicht direkt durch eine Quantenverschränkungsverbindung verbunden sind, und Auswählen eines oder mehrerer Zwischenknoten, sodass die Quantenverschränkungsverbindungen zwischen diesen Knoten einen Weg vom Startknoten zum Endknoten bilden;
c) Verwenden der Quantenschaltkreissysteme (SCQ) der Zwischenknoten und des klassischen Kommunikationsnetzwerks, um eine Aufeinanderfolge von Verschränkungsaustauschvorgängen zwischen Knoten durchzuführen, um einen neue Quantenverschränkungsverbindung zwischen dem Startknoten und dem Endknoten zu schaffen; und
d) Verwenden der Quantenschaltkreissysteme des Start- und Endknotens und des klassischen Kommunikationsnetzwerks (RTC), um einen Quantenzustand vom Startknoten zum Endknoten durch Nutzen der neuen Quantenverschränkungsverbindung zu übertragen.

## Claims

1. Quantum telecommunications network comprising:
- a plurality of at least three nodes (NT1 - NT12), at least some of which are located on the ground;
- a classical telecommunications network (RTC) connecting said nodes to one another;
- at least one source (SPI) of multiplets of entangled photons, carried by a satellite (SAT1, SAT2) or an airborne carrier; and
- an optical transmission system (SOT) allowing the photons of said multiplets to be transmitted to respective nodes of said quantum telecommunications network;
wherein each said node comprises:
- an optical reception system (SOR) for collecting photons originating from said or a said source (SPI);
- a classical network interface (IRC) allowing classical information to be exchanged with other nodes of the quantum telecommunications network; and
- a quantum circuit system (SCQ) configured to perform a direct or indirect joint quantum measurement on the quantum states of at least two photons collected by the optical system, projecting them onto a basis of maximally entangled states, and to transmit the result of the joint quantum measurement to other nodes of the quantum telecommunications network via the classical network interface; **characterized in that**:
- in at least some of said nodes, said quantum circuit system comprises:
- a quantum memory device (MQN) comprising a plurality of quantum subsystems;
- a first quantum circuit (CQ1) configured to transfer quantum states of photons collected by the optical reception system to respective quantum subsystems of the quantum memory device to be stored therein, whereby entanglement links are established between quantum subsystems of the quantum memory devices of the different nodes, said entanglement links constituting entanglement resources that are consumable and perishable through decoherence; and
- a second quantum circuit (CQ2) configured to perform said joint quantum measurement on the quantum states of at least two quantum subsystems of the quantum memory device, associated with respective photons; and **in that**
- said source (SPI) of multiplets of entangled photons and said optical transmission system are configured to transmit multiplets of mutually entangled photons to different nodes (NT1 - NT12) of the network so as to renew said resources according to their consumption and aging.

2. Quantum telecommunications network according to claim 1, wherein the quantum circuit system of at least one said node also comprises a third quantum circuit (CQ3) configured to apply a quantum distillation algorithm to a plurality of quantum subsystems of the quantum memory device.

3. Quantum telecommunications network according to any one of the preceding claims, wherein said or each said node (NT1 - NT12) also comprises a processor (PROC) configured or programmed to verify a violation of Bell inequalities by a series of said joint quantum measurements, so as to qualify the quality of the distributed entanglement.

4. Quantum telecommunications network according to any one of the preceding claims, wherein the quantum circuit system (SCQ) of at least one said node is configured to transmit the quantum state of a photon collected by the optical system or of a quantum subsystem of the quantum memory device over a quantum channel (CQ).

5. Quantum telecommunications network according to any one of the preceding claims, wherein the multiplets are pairs of entangled photons.

6. Quantum telecommunications network according to any one of the preceding claims, wherein the second quantum circuit of at least one said node is configured to perform a Bell measurement on the quantum states of two quantum subsystems of the quantum memory device, resulting in entanglement swapping between two other nodes of the network.

7. Quantum telecommunications method by means of a network according to any one of the preceding claims, comprising the following steps:
a) using said satellite or satellites (SAT1, SAT2) or airborne carriers to transmit multiplets of mutually entangled photons to different nodes (NT1 - NT12) of the network, such that quantum entanglement links between pairs or multiplets of nodes form a spanning subgraph of said network; and renewing said quantum entanglement links according to their consumption and aging;
b) defining a starting node (NT1) and an arrival node (NT12) not directly connected by a quantum entanglement link and selecting one or more intermediate nodes such that the quantum entanglement links between these nodes form a path from the starting node to the arrival node;
c) using the quantum circuit systems (SCQ) of the intermediate nodes and the classical telecommunications network to perform a succession of entanglement swapping operations between nodes so as to create a new quantum entanglement link between the starting node and the arrival node; and
d) using the quantum circuit systems of the starting and arrival nodes and the classical telecommunications network (CTN) to transmit a quantum state from the starting node to the arrival node by exploiting said new quantum entanglement link.
